# EUROPEAN PATENT APPLICATION

(11) **EP 4 656 442 A1**
(43) Date of publication of application: **03.12.2025**
(21) Application number: 25177827.0
(22) Date of filing: 21.05.2025
(51) Int. Cl.: B60L 53/12, B60L 53/14, B60L 53/22, H02J 7/02, H02J 50/10, B60L 55/00

(54) **ON-BOARD CHARGING APPARATUS FOR CHARGING A BATTERY OF AN ELECTRIFIED VEHICLE**

(30) Priority: 29.05.2024 US 202418676666
(71) Applicant: Borgwarner Inc., Auburn Hills, Michigan 48326 (US)
(72) Inventor: DOMINGUES, Gabriel, 22655 Lund (SE); LARRY, Rinehart, Oregon City, OR, 97045 (US)
(74) Representative: Peterreins Schley

(57) **Abstract**

An on-board charging apparatus for charging a battery of an electrified vehicle includes a wired power circuit configured to be conductively coupled to an external power source and receive AC power. The on-board charging apparatus also includes a wireless power circuit including a plurality of receiving coils configured to be electromagnetically coupled to a transmitting coil of an external inductive charger and receive three-phase AC power therefrom. The on-board charging apparatus further includes a converter coupled to the wired power circuit and the plurality of receiving coils of the wireless power circuit. The converter converts the AC power from the wired power circuit and the plurality of receiving coils into DC power to supply the DC power to the battery of the electrified vehicle.

## Description

### CROSS-REFERENCE TO RELATED APPLICATIONS

This application claims priority to United States Patent Application No. 18/676,666 filed May 29, 2024, which application is incorporated herein by reference in its entirety.

### TECHNICAL FIELD

The present disclosure relates generally to an on-board charging apparatus for charging batteries of electrified vehicles such as plug-in hybrid and pure electric vehicles.

### BACKGROUND

The automotive industry increasingly seeks to incorporate wireless charging systems into electrified vehicles (such as plug-in hybrids and pure electric vehicles) for several reasons including convenience and potential for automation (e.g. to charge an electrified vehicle without a human plugging in an electrical connector). However, even where a wireless charging system is incorporated into a vehicle, there is still a need for wired charging capabilities. Accordingly, there are challenges associated with component count, packing, and cost when incorporating both wired and wireless charging hardware into a vehicle. To this end, there remains a need for an improved on-board charging apparatus for electrified vehicles that is configured to receive both wired and wireless power.

### SUMMARY AND ADVANTAGES

One general aspect of the present disclosure is directed to an on-board charging apparatus for charging a battery of an electrified vehicle. The on-board charging apparatus includes a wired power circuit configured to be conductively coupled to an external power source and receive AC power therefrom. The on-board charging apparatus also includes a wireless power circuit including a plurality of receiving coils configured to be electromagnetically coupled to a three-phase transmitting coil of a three-phase external inductive charger and receive three-phase AC power therefrom. The on-board charging apparatus further includes a converter coupled to the wired power circuit and the plurality of receiving coils of the wireless power circuit. The converter converts the AC power from the wired power circuit and the plurality of receiving coils into DC power to supply the DC power to the battery of the electrified vehicle. The on-board charging apparatus further includes a coil switch interposed between the plurality of receiving coils and the converter. The coil switch is operable between a coil switch closed state and a coil switch open state for selectively interrupting electrical communication between the plurality of receiving coils and the converter. The on-board charging apparatus further includes a winding switch interposed between the wired power circuit and the converter. The winding switch is operable between a winding switch closed state and a winding switch open state for selectively interrupting electrical communication between the wired power circuit and the converter.

Another general aspect of the present disclosure is directed to an on-board charging apparatus for charging a battery of an electrified vehicle. The on-board charging apparatus includes a wired power circuit configured to be conductively coupled to an external power source and receive AC power therefrom. The on-board charging apparatus also includes a wireless power circuit including a plurality of receiving coils. The plurality of receiving coils is configured to be electromagnetically coupled to a three-phase transmitting coil of a three-phase external inductive charger and receive three-phase AC power therefrom. At least one of the plurality of receiving coils is further configured to be electromagnetically coupled to a single-phase transmitting coil of a single-phase external inductive charger and receive single-phase AC power therefrom. The on-board charging apparatus further includes a converter coupled to the wired power circuit and the plurality of receiving coils of the wireless power circuit. The converter converts the AC power from the wired power circuit and the plurality of receiving coils into DC power to supply the DC power to the battery of the electrified vehicle.

The on-board charging apparatus according to the present disclosure offers several advantages. The on-board charging apparatus enables an electrified vehicles to charge in a wired mode or a wireless mode, enhancing user convenience and potential for automation. The on-board charging apparatus also reduces component count, packaging, and cost challenges by leveraging shared AC-DC conversion hardware for both charging modes.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1A is a schematic representation of a vehicle including an on-board charging apparatus according to the present disclosure, with the on-board charging apparatus coupled to an external power source and operating in a wired power mode.
FIG. 1B is a schematic representation of a vehicle including the on-board charging apparatus according to the present disclosure, with the on-board charging apparatus coupled to an external inductive charger and operating in a wireless power mode.
FIG. 2A is a schematic representation of one example of an on-board charging apparatus according to the present disclosure operating in a wired charging mode.
FIG. 2B is a schematic representation of the on-board charging apparatus of FIG. 2A operating in a wireless charging mode, with a wireless power circuit of the on-board charging apparatus including a plurality of receiving coils arranged in a Y-configuration.
FIG. 3A is a schematic representation of another example of an on-board charging apparatus according to the present disclosure operating in a wired charging mode.
FIG. 3B is a schematic representation of the on-board charging apparatus of FIG. 3A operating in a wireless charging mode, with a wireless power circuit of the on-board charging apparatus including a plurality of receiving coils arranged in an isolated configuration.
FIG. 4A is a schematic representation of yet another example of an on-board charging apparatus according to the present disclosure operating in a wired charging mode, with a plurality of winding switches closed to bridge legs of a converter to rectify AC power from the wired power circuit.
FIG. 4B is a schematic representation of the on-board charging apparatus of FIG. 4A operating in a wireless charging mode, with the plurality of winding switches open to un-bridge legs of the converter to rectify AC power from a wireless power circuit.
FIG. 5A is a schematic representation of an additional example of an on-board charging apparatus according to the present disclosure operating in a wired charging mode, with a plurality of winding switches closed to bridge legs of a converter to rectify AC power from a wired power circuit.
FIG. 5B is a schematic representation of the on-board charging apparatus of FIG. 5A operating in a wireless charging mode, with a plurality of winding switches open to un-bridge legs of a converter to rectify AC power from a wireless power circuit.
FIG. 6A is a schematic representation of a vehicle including another example of an on-board charging apparatus according to the present disclosure, with the on-board charging apparatus coupled to an external power source and operating in a wired power mode.
FIG. 6B is a schematic representation of a vehicle including the on-board charging apparatus of FIG. 6A, with the on-board charging apparatus coupled to a three-phase external inductive charger and operating in a three-phase wireless power mode.
FIG. 6C is a schematic representation of a vehicle including the on-board charging apparatus of FIG. 6A, with the on-board charging apparatus coupled to a single-phase external inductive charger and operating in a single-phase wireless power mode.

### DETAILED DESCRIPTION

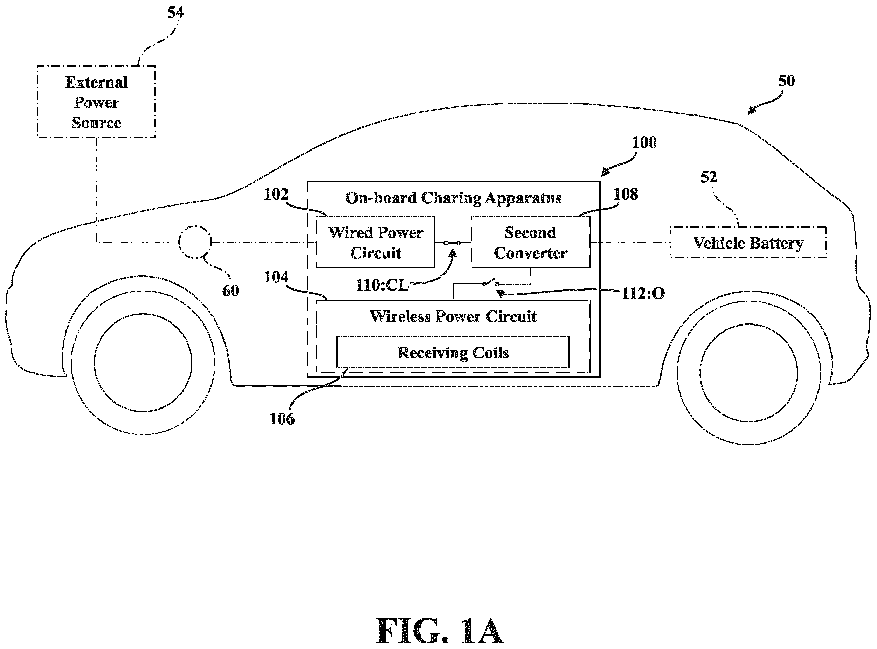

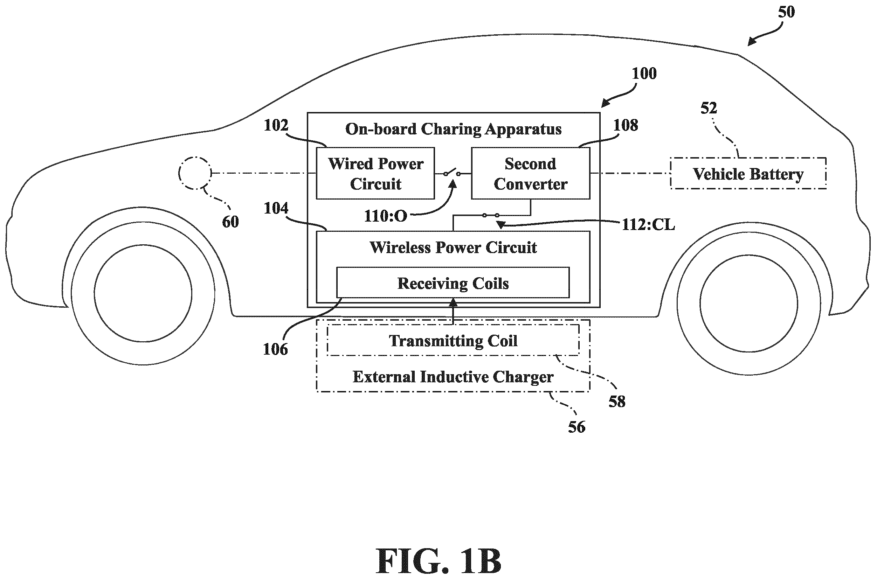

With reference to the Figures, wherein like numerals indicate like parts throughout the several views, FIGS. 1-5B generally show various examples of an on-board charging apparatus 100 according to the present disclosure for charging a battery 52 of an electrified vehicle 50.

Referring to the schematic representations of FIGS. 1A-1B, the on-board charging apparatus 100 includes a wired power circuit 102 configured to be conductively coupled to an external power source 54 and receive AC power from the external power source 54 (e.g. from a power grid). The AC power provided by the external power source 54 is typically low-frequency AC power (e.g. 50-60 Hz). The on-board charging apparatus 100 also includes a wireless power circuit 104 (described in further detail below) including a plurality of receiving coils 106 configured to be electromagnetically coupled to a transmitting coil 58 of an external inductive charger 56 and receive AC power from the transmitting coil 58 of the external inductive charger 56. The transmitting coil 58 is a three-phase transmitting coil configured to wirelessly transmit three-phase AC power to the plurality of receiving coils 106. In some configurations, however, the plurality of receiving coils 106 may also be configured to be electromagnetically coupled to a single-phase transmitting coil 58 configured to wirelessly transmit single-phase AC power to the plurality of receiving coils 106. The AC power provided by the transmitting coil 58 of the external inductive charger 56 is typically high-frequency AC power (e.g. 85 kHz). The on-board charging apparatus 100 further includes a converter 108 (described in further detail below) coupled to the wired power circuit 102 and the plurality of receiving coils 106 of the wireless power circuit 104. The converter 108 converts the AC power from the wired power circuit 102 and the plurality of receiving coils 106 into DC power to supply the DC power to the battery 52 of the electrified vehicle 50. It should also be appreciated that the on-board charging apparatus 100 may also include a bypass circuit for directly connecting a charging port 60 of the electrified vehicle 50 to the battery 52 such that the battery 52 may accept a DC fast charge.

With continued reference to FIGS. 1A-1B, the on-board charging apparatus 100 further includes a coil switch 110 interposed between the plurality of receiving coils 106 and the converter 108. The coil switch 110 is operable between a coil switch closed state 110: CL and a coil switch open state 110:O for selectively interrupting electrical communication between the plurality of receiving coils 106 and the converter 108. The on-board charging apparatus 100 further includes a winding switch 112 interposed between the wired power circuit 102 and the converter 108. The winding switch 112 is operable between a winding switch closed state 112:CL and a winding switch open state 112:O for selectively interrupting electrical communication between the wired power circuit 102 and the converter 108.

The coil switch 110 and the winding switch 112 may be in communication with a controller 113 such that the controller 113 is configured to operate the coil switch 110 and/or the winding switch 112 based on the operating mode of the on-board charging apparatus 100. A variety of configurations of the coil switch 110 and/or the winding switch 112 are contemplated, including electrically controlled mechanical switches (e.g. relays), solid-state switches (e.g. transistor-based switches), and the like. The controller 113 may include a memory. The memory may be any memory suitable for storage of data and computer-readable instructions. For example, the memory may be a local memory, an external memory, or a cloud-based memory realized as random-access memory (RAM), non-volatile RAM (NVRAM), flash memory, or any other suitable form of memory. The controller 113 may generally include one or more microprocessors for processing instructions or for processing algorithms stored in memory to control operation of the on-board charging apparatus 100. Additionally or alternatively, the controller 113 may include one or more microcontrollers, field programmable gate arrays, systems on a chip, discrete circuitry, and/or other suitable hardware, software, or firmware that is capable of carrying out the functions described herein. The controller 113 may be carried on-board the on-board charging apparatus 100 or may be remotely located. In one version, the controller 113 may include an internal clock to keep track of time, such as a microcontroller clock. The microcontroller clock may include a crystal resonator; a ceramic resonator; a resistor, capacitor (RC) oscillator, a silicon oscillator, or the like. The internal clock may be implemented in hardware, software, or both. The controller 113 may include one or more subcontrollers configured to control various components of the on-board charging apparatus 100. The controller 113 may communicate with the components of on-board charging apparatus 100 via wired or wireless connections. The controller 113 may generate and transmits control signals to the on-board charging apparatus 100, or components thereof, to operate the on-board charging apparatus 100 to perform one or more desired functions.

Referring to FIG. 1A, the on-board charging apparatus 100 is configured to operate in a plurality of modes including a wired charging mode. In the wired charging mode, the winding switch 112 is operated in the winding switch closed state 112:CL in response to the wired power circuit 102 being conductively coupled to the external power source 54 such that the wired power circuit 102 energizes the converter 108 to provide power to the battery 52 of the electrified vehicle 50. Additionally, in the wired charging mode, the coil switch 110 is operated in the coil switch open state 110:0 in response to the wired power circuit 102 being conductively coupled to the external power source 54 to interrupt electrical communication between the plurality of receiving coils 106 and the converter 108 to prevent the wireless power circuit 104 from being energized.

Referring to FIG. 1B, the plurality of modes of the on-board charging apparatus 100 also includes a wireless charging mode. In the wireless charging mode, the coil switch 110 is operated in the coil switch closed state 110: CL in response to the wireless power circuit 104 being electromagnetically coupled to the external inductive charger 56 such that the wireless power circuit 104 energizes the converter 108 to provide power to the battery 52 of the electrified vehicle 50. Additionally, in the wireless charging mode, the winding switch 112 is operated in the winding switch open state 112:O in response to the wireless power circuit 104 being electromagnetically coupled to the external inductive charger 56 to interrupt electrical communication between wired power circuit 102 and the converter 108 to prevent the wired power circuit 102 from being energized.

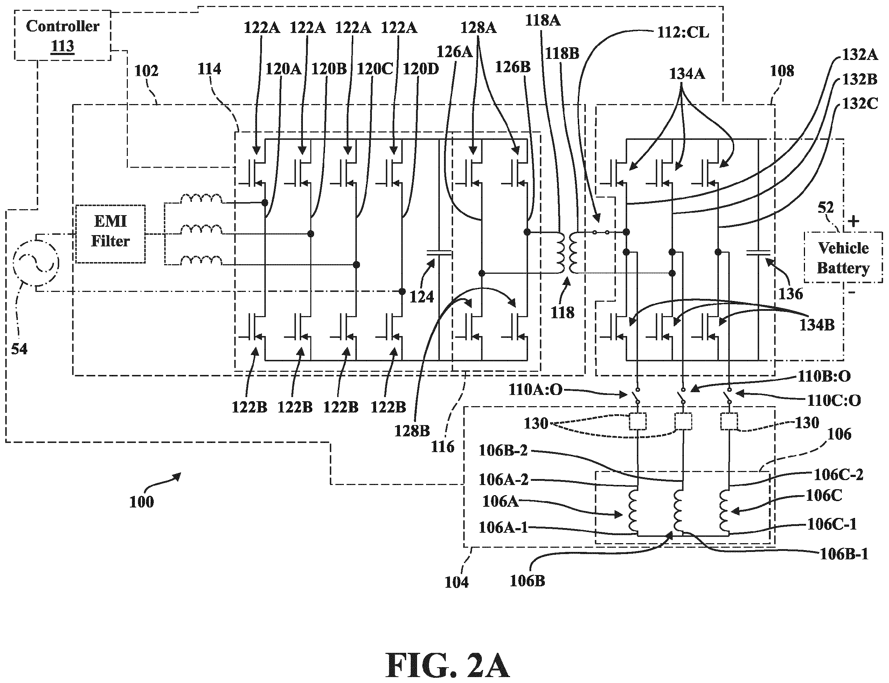

Generally, the wired power circuit 102 is configured to convert the low-frequency AC power received from the external power source 54 into high-frequency AC power and provide the high-frequency AC power to the converter 108. The specific implementation of the wired power circuit 102 is not particularly limited for the purposes of this disclosure. The wired power circuit 102 may be configured to receive low-frequency AC power from the external power source 54 in a variety of modalities. In some configurations, the wired power circuit 102 may be configured to receive single phase low-frequency AC power from the external power source 54. The wired power circuit 102 may be additionally or alternatively configured to receive three-phase low-frequency AC power from the external power source 54. It should also be appreciated that the wired power circuit may be configured to receive AC power from the external power source 54 at a variety of voltages (e.g. 120V, 240V, 480V, etc.). FIGS. 2A-5B illustrate one exemplary configuration of the wired power circuit 102. It should be appreciated that the configuration of wired power circuit 102 illustrated in FIGS. 2A-5B is merely one example of the wired power circuit 102and that other configurations of wired power circuit 102 are contemplated. It should further be appreciated that the wired power circuit 102 may include additional components not described herein.

In the configuration of FIGS. 2A-5B, the wired power circuit 102 includes a wired power converter 114 for converting the low-frequency AC power received from the external power source 54 into DC power, an inverter 116 coupled to the wired power converter 114 for converting the DC power from the wired power converter 114 into high-frequency AC power at a first voltage, and an insulated transformer 118 including a primary winding 118A coupled to the inverter 116, and a secondary winding 118B electromagnetically coupled to the primary winding 118A for transforming the high-frequency AC power from the first voltage to a second voltage which is different than the first voltage. To achieve the conversion of the first voltage to the second voltage, the primary winding 118A may include a primary number of windings, and the secondary winding 118B may include a secondary number of windings, with the ratio of the primary number of windings to the secondary number of windings corresponding a desired voltage transformation therebetween. The second voltage may correspond the voltage of the battery 52 of the electrified vehicle 50 (e.g. 400 volts, 800 volts, etc.). It should also be appreciated that the insulated transformer 118 may serve to isolate the wired power converter 114 from the converter 108 to protect the wired power converter 114 and/or the converter 108 from interference, surges, etc. Also, in some examples, such as shown in phantom in FIGS. 2A-5B, an EMI filter and/or one or more inductors may be disposed between a charge port 60 of the vehicle and the wired power converter 114.

In some examples, the wired power converter 114 is implemented as a rectifier including a plurality of diodes for converting the low-frequency AC power received from the external power source 54 into DC power. In other examples, the on-board charging apparatus 100 is further defined as a bidirectional on-board charging apparatus 100. In these examples, the bidirectional on-board charging apparatus 100 is also configured to transmit power from the battery 52 of the electrified vehicle 50 back to the external power source 54 (i.e., the on-board charging apparatus 100 is further operational in Vehicle-to-Grid (V2G) mode). In these examples, the wired power converter 114 is implemented as a bidirectional wired power converter 114 including hardware capable of both rectification (AC to DC) and inversion (DC to AC). Here, the wired power converter 114 is configured to operate as a rectifier where the on-board charging apparatus 100 operates in the wired charging mode, and the wired power converter 114 is configured to operate as an inverter where the on-board charging apparatus 100 operates in the V2G mode. It should also be appreciated that where the on-board charging apparatus 100 is a bidirectional on-board charging apparatus 100, the inverter 116 and the converter 108 are also configured to operate bidirectionally (described in further detail below).

FIGS. 2A-5B illustrate one example of the wired power converter 114. In the illustrated configurations of FIGS. 2A-5B, the wired power converter 114 includes four wired power converter legs 120A, 120B, 120C, 120D, with each wired power converter leg 120A, 120B, 120C, 120D including two switches (122A, 122B) arranged in series. In FIGS. 2A-5B, the wired power converter 114 is implemented as a single-phase bidirectional AC-DC converter configured receive and/or return single-phase low-frequency AC power from/to the external power source 54. Particularly, legs 120A, 120B, 120C are configured to operate in parallel to receive and/or return single-phase low-frequency AC power from/to the external power source 54. It should be appreciated that in some single-phase configurations, legs 120B, 120C may be removed. It should be appreciated that the wired power converter 114 may also be configured to receive and/or return three-phase low-frequency AC power from/to the external power source 54. In a three-phase configuration, legs 120A, 120B, 120C may respectively correspond to one of the three phases of the external power source 54, with leg 120D being implemented as an additional neutral leg to manage any imbalances. The switches 122A, 122B may implemented as MOSFET switches (e.g. silicon MOSFET switches, or even silicon carbide MOSFET switches or gallium nitride MOSFET switches where higher performance characteristics are needed) but other configurations are contemplated. Each of the switches 122A, 122B may be in communication with the controller 113 such that the controller 113 is configured to operate the switches 122A, 122B in concert such that the wired power converter 114 rectifies the low-frequency AC power received from the external power source 54 into DC power in the wired charging mode, and such that the wired power converter 114 inverts the DC power ultimately provided by the battery 52 of the electrified vehicle 50 into low-frequency AC power where the on-board charging apparatus 100 operates in the V2G mode. In the examples illustrated in FIGS 2A-5B, switches 122A, 122B may be replaced with diodes where bidirectional operation of the on-board charging apparatus 100 is not needed. In the illustrated configuration, the wired power converter 114 also includes a capacitor 124 for smoothing the output of the wired power converter 114. It should be appreciated that the configuration of the wired power converter 114 illustrated in FIGS. 2A-5B is merely one example of the wired power converter 114 and that other configurations of the wired power converter 114 are contemplated. It should further be appreciated that the wired power converter 114 may include additional components not described herein (e.g. to effectuate control of the switches 122A, 122B, to filter, to disconnect terminals, and to monitor operating parameters of the wired power converter 114).

FIGS. 2A-5B also illustrate one example of the inverter 116 for converting the DC power from the wired power converter 114 into high-frequency AC power. In the illustrated example, the inverter 116 includes two inverter legs 126A, 126B, with each inverter leg 126A, 126B including two switches (128A, 128B) arranged in series. The switches 122A, 122B may implemented as MOSFET switches (e.g. silicon MOSFET switches, or even silicon carbide MOSFET switches or gallium nitride MOSFET switches where higher performance characteristics are needed) but other configurations are contemplated. Each of the switches 128A, 128B may be in communication with the controller 113 such that the controller 113 is configured to operate the switches 128A, 128B in concert such that the inverter 116 inverts the DC power received from the wired power converter 114 of the electrified vehicle 50 into high-frequency AC power where the on-board charging apparatus 100 operates in the wired charging mode. The inverter 116 may also be configured to be bidirectional and rectify high-frequency AC power received from converter 108 into DC power and provide the DC power to the wired power converter 114 where the on-board charging apparatus 100 operates in V2G mode. It should be appreciated that the configuration of the inverter 116 illustrated in FIGS. 2A-5B is merely one example of the inverter 116 and that other configurations of the inverter 116 are contemplated. It should further be appreciated that the inverter 116 may include additional components not described herein (e.g. to effectuate control of the switches 128A, 128B to provide soft-switch operation of the switches 128A, 128B, and to monitor operating parameters of the inverter 116).

FIGS. 2A-5B also illustrate various configurations of the converter 108, which are described in further detail below. At a high level, the converter 108 is coupled to both the wired power circuit 102 (e.g. to the secondary winding 118B) and the plurality of receiving coils 106 of the wireless power circuit 104 such that the converter 108 converts the AC power from the wired power circuit 102and the plurality of receiving coils 106 into DC power to supply the DC power to the battery 52 of the electrified vehicle 50. Stated differently, the converter 108 is configured such that the converter 108 is capable of rectifying AC power from the wired power circuit 102 where the on-board charging apparatus 100 operates in the wired charging mode, and is capable of rectifying AC power from the wireless power circuit 104 where the on-board charging apparatus 100 operates in the wireless charging mode. Advantageously, by configuring the converter 108 such that the converter 108 can convert the AC power from the wired power circuit 102and the plurality of receiving coils 106 into DC power to supply the DC power to the battery 52 of the electrified vehicle 50, the need for an additional converter specifically dedicated to the wireless power circuit 104 is eliminated, thereby reducing component count, cost, and improving the packaging of the on-board charging apparatus 100.

In some examples, the converter 108 may be implemented as a rectifier including a plurality of diodes for converting the AC power received from the wired power circuit 102 (e.g. from the secondary winding 118B) and/or the plurality of receiving coils 106 into DC power and to supply the DC power to the battery 52 of the electrified vehicle 50. In examples where the on-board charging apparatus 100 is implemented as a bidirectional on-board charging apparatus 100, the converter 108 is implemented as a bidirectional converter 108 including hardware capable of both rectification (AC to DC) and inversion (DC to AC). Here, the converter 108 is configured to operate as a rectifier where the on-board charging apparatus 100 operates in the wired charging mode (to rectify high-frequency AC power received from the wired power circuit 102) and in the wireless charging mode (to rectify high-frequency AC power received from the plurality of receiving coils 106), and the converter 108 is additionally configured to operate as an inverter where the on-board charging apparatus 100 operates in the V2G mode (to provide AC power back to the wired power circuit 102, and ultimately, back to the external power source 54).

As described in further detail in the examples of FIGS. 2A-5B, the converter 108 may include a plurality of legs (132A, 132B, 132C, etc.) with each leg including two switches 134A, 134B arranged in series. The switches 134A, 134B may implemented as MOSFET switches (e.g. silicon MOSFET switches, or even silicon carbide MOSFET switches or gallium nitride MOSFET switches where higher performance characteristics are needed) but other configurations are contemplated. Each of the switches 134A, 134B may be in communication with the controller 113 such that the controller 113 is configured to operate the switches 134A, 134B in concert such that the converter 108 rectifies the AC power received from received from the wired power circuit 102 (e.g. from the secondary winding 118B) and/or the plurality of receiving coils 106 into DC power to supply the DC power to the battery 52 of the electrified vehicle 50 in the wired charging mode and the wireless charging mode. In the illustrated configuration, the converter 108 also includes a capacitor 136 for smoothing the output of the converter 108 before the DC power is provided to the battery 52 of the electrified vehicle 50. Where the on-board charging apparatus 100 operates in the V2G mode, the converter 108 is configured to invert the DC power received from the battery 52 of the electrified vehicle 50 into AC power and to provide the AC power back to the wired power circuit 102, and ultimately, back to the external power source 54 (e.g. as described above in the context of bidirectional operation of the wired power converter 114 and inverter 116). In the examples illustrated in FIGS 2A-5B, switches 134A, 134B may be replaced with diodes where bidirectional operation of the on-board charging apparatus 100 is not needed.

It should be appreciated that the configurations of the converter 108 illustrated in FIGS. 2A-5B are merely examples of the converter 108 and that other configurations of the converter 108 are contemplated. It should also be appreciated that the converter 108 may include additional components not described herein (e.g. to effectuate control of the switches 134A, 134B, and to monitor operating parameters of the converter 108). It should further be appreciated that the converter 108 illustrated in FIGS. 2A-5B may also be configured to rectify single-phase high-frequency AC power received by one or more of the plurality of receiving coils 106. In these examples, the converter 108 may only operate some of the plurality of legs (132A, 132B, 132C, etc.) to rectify the single-phase high-frequency AC power, or may operate a combination of the plurality of legs (132A, 132B, 132C, etc.) in parallel to the single-phase high-frequency AC power.

As described above, the wireless power circuit 104 includes a plurality of receiving coils 106 configured to be electromagnetically coupled to a transmitting coil 58 of an external inductive charger 56 and receive three-phase high-frequency AC power therefrom. In some examples, the plurality of receiving coils 106 comprises a first receiving coil 106A for receiving a first phase of high-frequency AC power from the transmitting coil 58, a second receiving coil 106B for receiving a second phase of high-frequency AC power from the transmitting coil 58, and a third receiving coil 106C for receiving a third phase of high-frequency AC power from the transmitting coil 58. It should also be appreciated that in some examples, at least one of the plurality of receiving coils 106 is further configured to be electromagnetically coupled to a single-phase transmitting coil 58 of a single-phase external inductive charger 56 and receive single-phase high-frequency AC power therefrom. Additionally, as illustrated in phantom in FIGS. 2A-5A, one or more resonant tank circuits 130 may be coupled the plurality of receiving coils 106 to assist the plurality of receiving coils 106 in wirelessly receiving power from the external inductive charger 56.

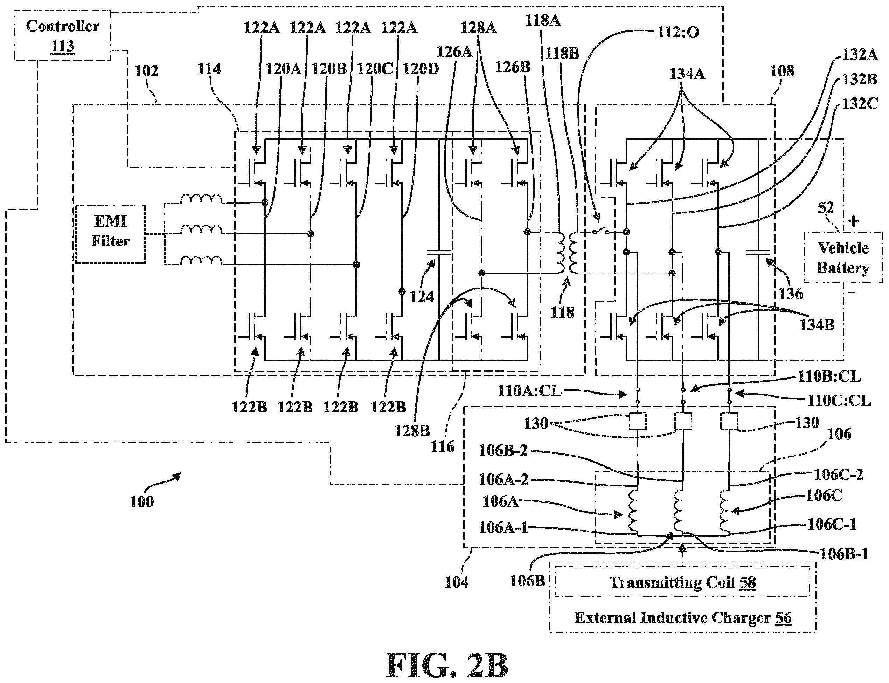

FIGS. 2A and 2B illustrate one exemplary configuration of the wireless power circuit 104. Here, a first terminal 106A-1 of the first receiving coil 106A, a first terminal 106B-1 of the second receiving coil 106B, and a first terminal 106C-1 of the third receiving coil 106C are coupled such that the first receiving coil 106A, the second receiving coil 106B, and the third receiving coil 106C are arranged in a Y-configuration. FIGS. 2A and 2B also illustrate one configuration of the converter 108 configured to be coupled to such a Y-configuration of the plurality of receiving coils 106. In the illustrated configuration, the converter 108 includes a first leg 132A, a second leg 132B, and a third leg 132C, with each of the first leg 132A, the second leg 132B, and the third leg 132C including two switches 134A, 134B. Here, a second terminal 106A-2 of the first receiving coil 106A is coupled to the first leg 132A of the converter 108 (e.g. between the switches 134A, 134B), a second terminal 106B-3 of the second receiving coil 106B is coupled to the second leg 132B of the converter 108 (e.g. between the switches 134A, 134B), and a second terminal 106C-2 of the third receiving coil 106C is coupled to the second leg 132B of the converter 108 (e.g. between the switches 134A, 134B), thereby coupling the wireless power circuit 104 to the converter 108. In this configuration, to couple the wired power circuit 102 to the converter 108, the wired power circuit 102is coupled to two of the first leg 132A, the second leg 132B, and the third leg 132C (e.g. with one terminal of the secondary winding 118B coupled to the first leg 132A between the switches 134A, 134B, and with the other terminal of the secondary winding 118B coupled to the second leg 132B between the switches 134A, 134B). In the illustrated configuration, the wired power circuit 102only needs to be coupled to two of the legs of the converter 108 because the high-frequency power provided by the secondary winding 118B is single-phase AC power, and thus does not require three legs for rectification. Additionally, in the illustrated configuration, the winding switch 112 is interposed between the wired power circuit 102 and the converter 108 (e.g. between the secondary winding 118B and the converter 108) for selectively interrupting electrical communication between the wired power circuit 102 and the converter 108.

With continued reference to FIGS. 2A and 2B, in the illustrated configuration, the coil switch 110 includes a plurality of coil switches 110. The plurality of coil switches 110 includes a first coil switch 110A interposed between the first leg 132A of the converter 108 and the second terminal 106A-2 of the first receiving coil 106A to selectively interrupt electrical communication therebetween, a second coil switch 110B interposed between the second leg 132B of the converter 108 and the second terminal 106B-2 of the second receiving coil 106B to selectively interrupt electrical communication therebetween, and a third coil switch 110C interposed between the third leg 132C of the converter 108 and the second terminal 106C-2 of the third receiving coil 106C to selectively interrupt electrical communication therebetween.

Referring to FIG. 2A, in the illustrated configuration, where the on-board charging apparatus 100 operates in the wired charging mode, the plurality of coil switches 110 are each operated in the coil switch open state 110:O in response to the wired power circuit 102 being conductively coupled to the external power source 54 to interrupt electrical communication between the plurality of receiving coils 106 and the converter 108. With continued reference to FIG. 2A, in the illustrated configuration, where the on-board charging apparatus 100 operates in the wired charging mode, the winding switch 112 is operated in the winding switch closed state 112:CL to couple the wired power circuit 102 to the converter 108. As a result, where the on-board charging apparatus 100 operates in the wired charging mode, only the wired power circuit 102 is functionally coupled to the converter 108 (i.e., the wireless power circuit 104 is functionally decoupled from the converter 108).

Referring to FIG. 2B, in the illustrated configuration, where the on-board charging apparatus 100 operates in the wireless charging mode, the winding switch 112 is operated in the winding switch open state 112:O in response to the wireless power circuit 104 being electromagnetically coupled to the external inductive charger 56 (e.g. the three-phase external inductive charger 56 or the single-phase external inductive charger 56) to interrupt electrical communication between the wired power circuit 102and the converter 108. With continued reference to FIG. 2B, in the illustrated configuration, where the on-board charging apparatus 100 operates in the wireless charging mode, the plurality of coil switches 110 are each operated in the coil switch closed state 110: CL to couple the wireless power circuit 104 to the converter 108. As a result, where the on-board charging apparatus 100 operates in the wireless charging mode, only the wireless power circuit 104 is functionally coupled to the converter 108 (i.e., the wired power circuit 102 is functionally decoupled from the converter 108).

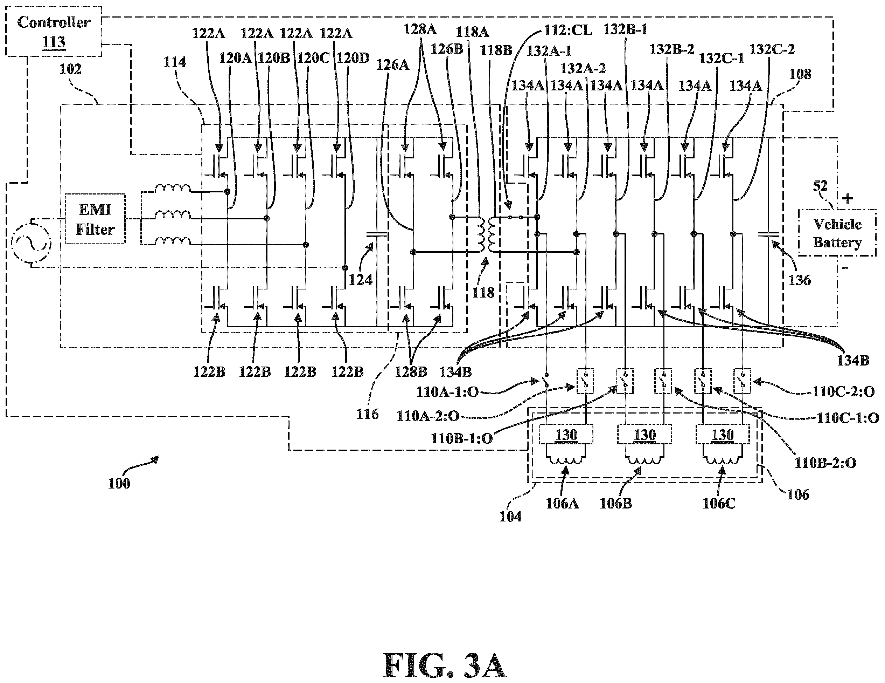

FIGS. 3A-5B illustrate another exemplary configuration of the wireless power circuit 104. In these examples, the first receiving coil 106A, the second receiving coil 106B, and the third receiving coil 106C are electrically isolated from each other (i.e., they are not connected to each other directly, such as in the "Y-configuration" described above in the context of FIGS. 2A and 2B). FIGS. 3A-5B also illustrate one configuration of the converter 108 configured to be coupled to such an isolated configuration of the plurality of receiving coils 106. In the illustrated configuration, the converter 108 includes a first pair of legs 132A-1, 132A-2, a second pair of legs 132B-1, 132B-2, and a third pair of legs 132C-1, 132C-2, with each of the legs including two switches 134A, 134B. In these examples, the first receiving coil 106A is coupled to the first pair of legs 132A-1, 132A-2 (e.g. to each leg 132A-1, 132A-2 between the switches 134A, 134B), the second receiving coil 106B is coupled to the second pair of legs 132B-1, 132B-2 (e.g. to each leg 132B-1, 132B-2 between the switches 134A, 134B), and the third receiving coil 106C is coupled to the third pair of legs 132C-1, 132C-2 (e.g. to each leg 132C-1, 132C-2 between the switches 134A, 134B), thereby coupling the wireless power circuit 104 to the converter 108. Accordingly, the first pair of legs 132A-1, 132A-2 is configured to rectify the first phase of high-frequency AC power received by the first receiving coil 106A, the second pair of legs 132B-1, 132B-2 is configured to rectify the second phase of high-frequency AC power received by the second receiving coil 106B, and the third pair of legs 132B-1, 132B-2 is configured to rectify the third phase of high-frequency AC power received by the third receiving coil 106C.

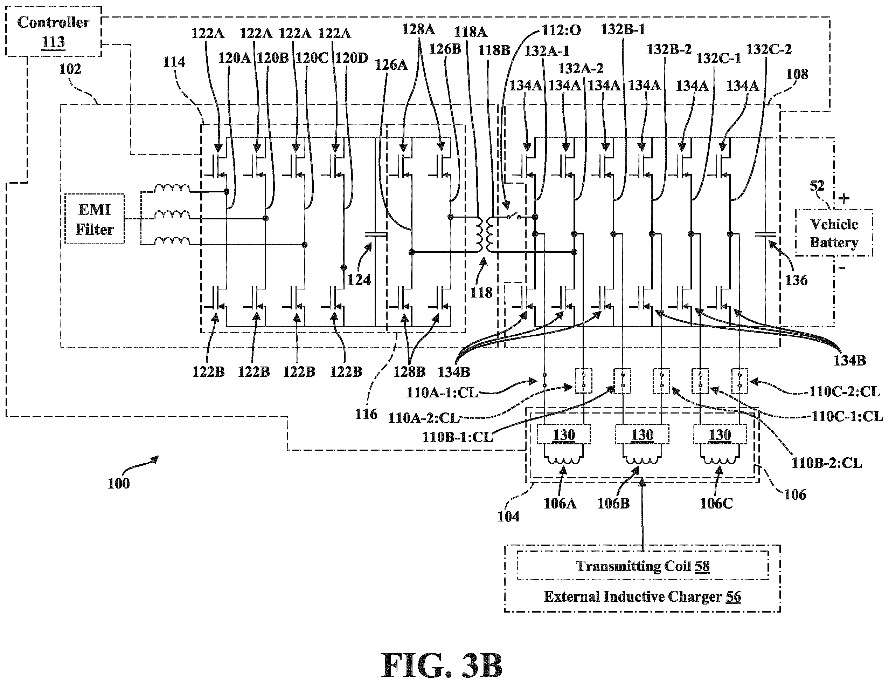

FIGS. 3A-5B also illustrate various configurations for coupling the wired power circuit 102 to the converter 108. In these examples, the wired power circuit 102 (e.g. the secondary winding 118B) is coupled to at least one of the first pair of legs 132A-1, 132A-2, the second pair of legs 132B-1, 132B-2, and the third pair of legs 132C-1, 132C-2. For example, in the configuration of FIGS. 3A and 3B, the secondary winding 118B is coupled to only the first pair of legs 132A-1, 132A-2 (e.g. with one terminal of the secondary winding 118B coupled to leg 132A-1 between the switches 134A, 134B, and with the other terminal of the secondary winding 118B coupled to leg 132A-2 between the switches 134A, 134B). It should be appreciated that the secondary winding 118B only needs to be coupled to two of the legs of the converter 108 (e.g. one of the first pair of legs 132A-1, 132A-2, the second pair of legs 132B-1, 132B-2, and the third pair of legs 132C-1, 132C-2) because the high-frequency AC power provided by the secondary winding 118B is single-phase AC power, and thus does not require additional legs for rectification.

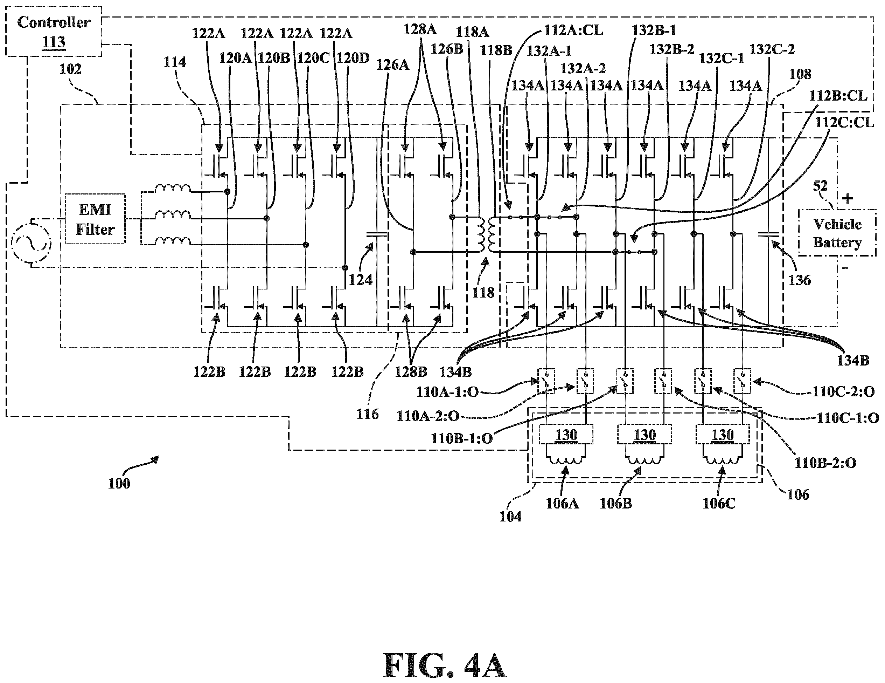

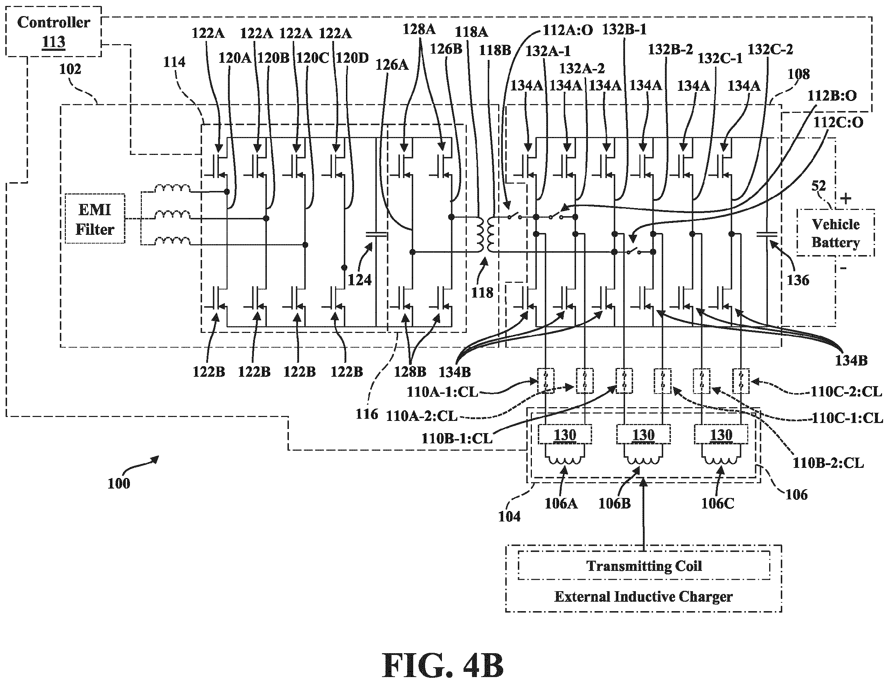

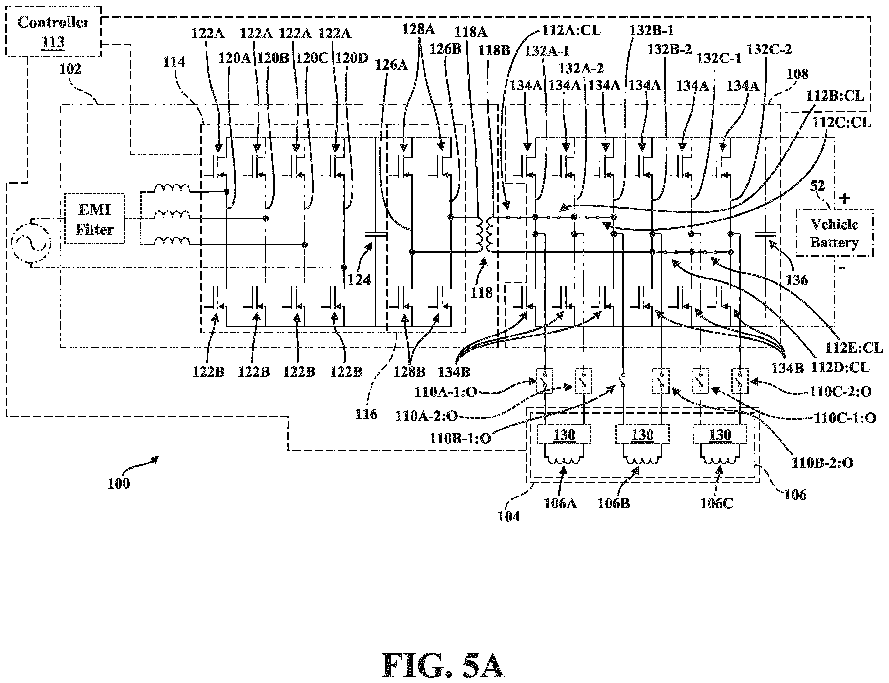

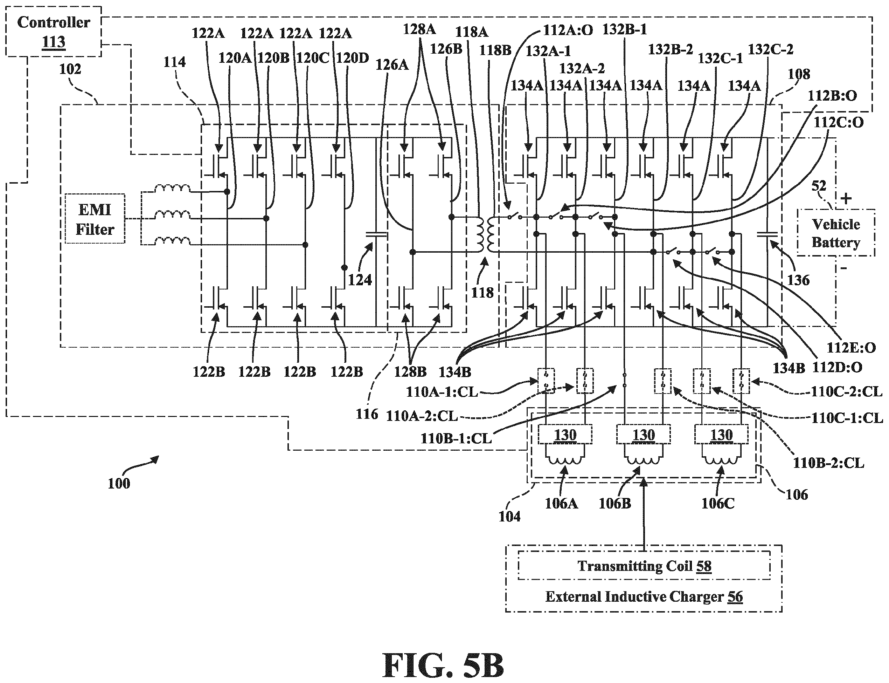

In some examples, referring to FIGS. 4A-5B, the wired power circuit 102 (e.g. the secondary winding 118B) may be coupled to more than two of the legs of the converter 108 such that the legs operate in parallel to rectify the high-frequency AC power received by the secondary winding 118B. Such configurations subject the switches 134A, 134B to a lower electrical load, thereby allowing lower rated switches 134A, 134B to be employed, reducing cost. In the illustrated example, referring to FIGS. 4A and 4B, one terminal of the secondary winding 118B is coupled the first pair of legs 132A-1, 132A-2, and the other terminal of the secondary winding 118B is coupled to the second pair of legs 132B-1, 132B-2 such that the first pair of legs 132A-1, 132A-2 and the second pair of legs 132B-1, 132B-2, respectively, operate in parallel to rectify the high-frequency AC power received from the wired power circuit 102. In another example, referring to FIGS. 5A and 5B, one terminal of the secondary winding 118B is coupled to legs 132A-1, 132A-2, and 132B-1, and the other terminal of the secondary winding 118B is coupled to legs 132B-2, 132C-1, and 132C-2 such that the legs 132A-1, 132A-2, and 132B-1 and legs 132B-2, 132C-1, and 132C-2, respectively, operate in parallel to rectify the high-frequency AC power received from the wired power circuit 102. Other configurations of coupling the wired power circuit 102 to the converter 108 are contemplated.

As shown in FIGS. 4A-5B, where the secondary winding 118B is coupled to more than two legs of the converter 108, the winding switch 112 includes a plurality of winding switches 112, with each of the winding switches 112 operable between the winding switch closed state 112:CL and the winding switch open state 112:O. In these examples, the plurality of winding switches 112 includes additional winding switches 112 for selectively arranging the wired power circuit 102in communication with more than two legs of the converter 108 at the same time, as described above.

In one example, referring to FIGS. 4A and 4B, the plurality of winding switches 112 includes a first winding switch 112A interposed between wired power circuit 102 (e.g. the secondary winding 118B) and the converter 108 to selectively interrupt electrical communication therebetween. In this example, the plurality of winding switches 112 also includes a second winding switch 112B interposed between the first pair of legs 132A-1, 132A-2 to selectively bridge the first pair of legs 132A-1, 132A-2 such that the first pair of legs 132A-1, 132A-2 is configured to operate in parallel to rectify the high-frequency AC power provided by the wired power circuit 102. Similarly, the plurality of winding switches 112 also includes third winding switch 112C interposed between the second pair of legs 132B-1, 132B-2 to selectively bridge the second pair of legs 132B-1, 132B-2 such that the second pair of legs 132B-1, 132B-2 is configured to operate in parallel to rectify the high-frequency AC power provided by the wired power circuit 102. Referring to FIG. 4A, the plurality of winding switches 112 are each configured to operate in the winding switch closed state 112:CL to couple the wired power circuit 102 (e.g. the secondary winding 118B) to the first pair of legs 132A-1, 132A-2 and the second pair of legs 132B-1, 132B-2 where the on-board charging apparatus 100 operates in the wired charging mode. Referring to FIG. 4B, the plurality of winding switches 112 are each configured to operate in the winding switch open state 112:O to decouple the wired power circuit 102 from the converter 108 and un-bridge the first pair of legs 132A-1, 132A-2 and the second pair of legs 132B-1, 132B-2 where the on-board charging apparatus 100 operates in the wireless charging mode.

In another example, referring to FIGS. 5A and 5B, the plurality of winding switches 112 includes a first winding switch 112A interposed between the wired power circuit 102 (e.g. secondary winding 118B) and the converter 108 to selectively interrupt electrical communication therebetween. In this example, the plurality of winding switches 112 also includes a second winding switch 112B interposed between legs 132A-1 and 132A-2, and a third winding switch 112C interposed between legs 132A-2 and 132B-1 to selectively bridge legs 132A-1, 132A-2, and 132B-1 such that legs 132A-1, 132A-2, and 132B-1 operate in parallel to rectify the high-frequency AC power provided by the wired power circuit 102. Similarly, the plurality of winding switches 112 also includes fourth winding switch 112D interposed between legs 132B-2 and 132C-1, and a fifth winding switch 112E interposed between legs 132C-1 and 132C-2 to selectively bridge legs 132B-2, 132C-1, and 132C-2 such that legs 132B-2, 132C-1, and 132C-2 operate in parallel to rectify the high-frequency AC power provided by the wired power circuit 102. In the configuration illustrated in FIG. 5A, the plurality of winding switches 112 are each configured to operate in the winding switch closed state 112:CL to couple the one terminal of the secondary winding 118B to legs 132A-1, 132A-2, and 132B-1 and the other terminal of the secondary winding 118B to legs 132B-2, 132C-1, and 132C-2 where the on-board charging apparatus 100 operates in the wired charging mode. Referring to FIG. 5B, the plurality of winding switches 112 are each configured to operate in the winding switch open state 112:O to decouple the secondary winding 118B from the converter 108 and un-bridge legs 132A-1, 132A-2, and 132B-1 and legs 132B-2, 132C-1, and 132C-2 where the on-board charging apparatus 100 operates in the wireless charging mode.

With continued reference to FIGS. 3A-5B, in the illustrated examples, the coil switch 110 is also defined as a plurality of coil switches 110. Here, the plurality of coil switches includes at least one first coil switch 110A interposed between the first pair of legs 132A-1, 132A-2 and the first receiving coil 106A to selectively interrupt electrical communication therebetween, and at least one second coil switch 110B interposed between the second pair of legs 132B-1, 132B-2 and the second receiving coil 106B to selectively interrupt electrical communication therebetween. Similar to as described above, where the on-board charging apparatus 100 operates in the wireless charging mode, the plurality of coil switches 110 are each operated in the coil switch closed state 110:CL to couple the wireless power circuit 104 to the converter 108. Conversely, where the on-board charging apparatus 100 operates in the wired charging mode, the plurality of coil switches 110 are each operated in the coil switch open state 110:O to interrupt electrical communication between the wireless power circuit 104 to the converter 108.

As illustrated in FIGS. 3A-5B, the at least one first coil switch 110A, at a minimum, is interposed between the first receiving coil 106A and one of the first pair of legs 132A-1, 132A-2 to selectively interrupt electrical communication therebetween. In some examples, such as illustrated in phantom in FIGS. 3A-5B, the at least one first coil switch 110A includes two first coil switches 110A-1, 110A-2, with first coil switch 110A-1 interposed between the first receiving coil 106A and leg 132A-1, and with first coil switch 110A-2 interposed between the first receiving coil 106A and leg 132A-2. Here, including the additional first coil switch 110A-2 ensures that the first receiving coil 106A is completely disconnected from the converter 108 during operation of the on-board charging apparatus 100 in the wired charging mode, preventing any unintended energization of the first receiving coil 106A. Similarly, the at least one second coil switch 110B, at a minimum, is interposed between the second receiving coil 106B and one of the second pair of legs 132B-1, 132B-2 to selectively interrupt electrical communication therebetween. In some examples, such as illustrated in phantom in FIGS. 3A-5B, the at least one second coil switch 110B includes two second coil switches 110B-1, 110B-2, with second coil switch 110B-1 interposed between the second receiving coil 106B and leg 132B-1, and with second coil switch 110B-2 interposed between the second receiving coil 106B and leg 132B-2. Here, including the additional second coil switch 110B-2 ensures that the second receiving coil 106B is completely disconnected from the converter 108 during operation of the on-board charging apparatus 100 in the wired charging mode, preventing any unintended energization of the second receiving coil 106B.

It should be appreciated that the plurality of coil switches 110 does not necessarily include coil switch(es) 110 interposed between each receiving coil and the converter 108 (e.g., between the third receiving coil 106C and the third pair of legs 132C-1, 132C-2 of the converter 108). More specifically, particularly in the configurations of FIGS. 3A-4B, the wired power circuit 102 is only coupled to the first pair of legs 132A-1, 132A-2 and/or the second pair of legs 132B-1, 132B-2 of the converter 108. Accordingly, in these examples, the third pair of legs 132B-1, 132B-2 are not energized during operation of the on-board charging apparatus 100 in the wired charging mode. Here, the switches 134A, 134B of the third pair of legs 132C-1, 132C-2 may operate in an open state during operation of the on-board charging apparatus 100 in the wired charging mode to interrupt electrical communication between the third pair of legs 132C-1, 132C-2 and the third receiving coil 106C, obviating the need for additional coil switches 110 therebetween. However, as illustrated in phantom in FIGS. 3A-5B, in other configurations, the plurality of coil switches further includes at least one third coil switch 110C interposed between the third pair of legs 132C-1, 132C-2 and the third receiving coil 106C to selectively interrupt electrical communication therebetween. Similar to as described above, the at least one third coil switch 110C, at a minimum, is interposed between the third receiving coil 106C and one of the third pair of legs 132C-1, 132C-2 to selectively interrupt electrical communication therebetween. In some examples, such as illustrated in phantom in FIGS. 3A-5B, the at least one third coil switch 110C includes two third coil switches 110C-1, 110C-2, with third coil switch 110C-1 interposed between the third receiving coil 106C and leg 132C-1, and with third coil switch 110C-2 interposed between the third receiving coil 106C and leg 132C-2. Here, including the additional third coil switch 110C-2 ensures that the third receiving coil 106C is completely disconnected from the converter 108 during operation of the on-board charging apparatus 100 in the wired charging mode, preventing any unintended energization of the third receiving coil 106C. It also should be appreciated that in other configurations some or all of the coil switch(es) 110 may be omitted between the first receiving coil 106A and the converter 108 and/or between the second receiving coil 106B and the converter 108 where there is no chance of unintended energization.

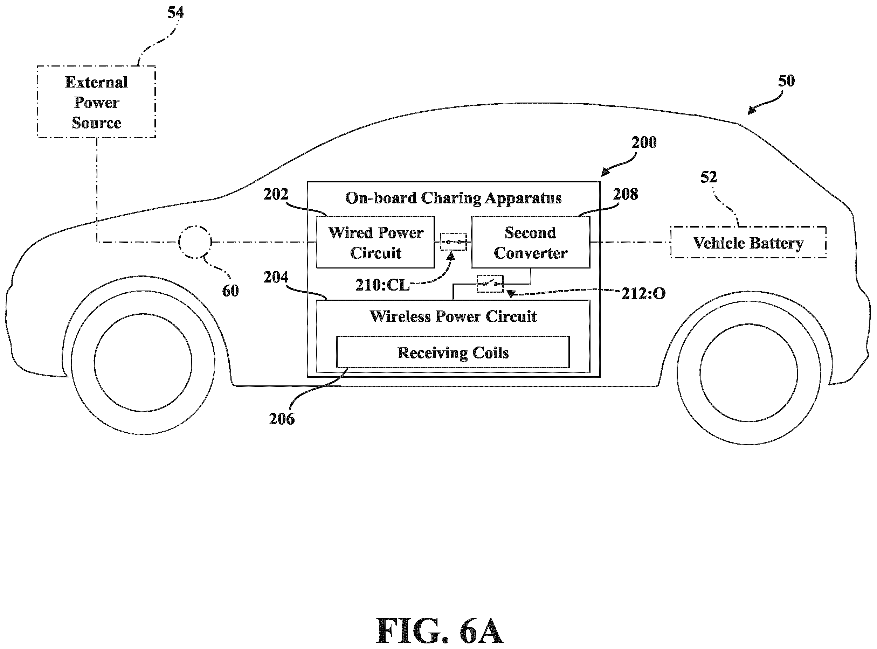

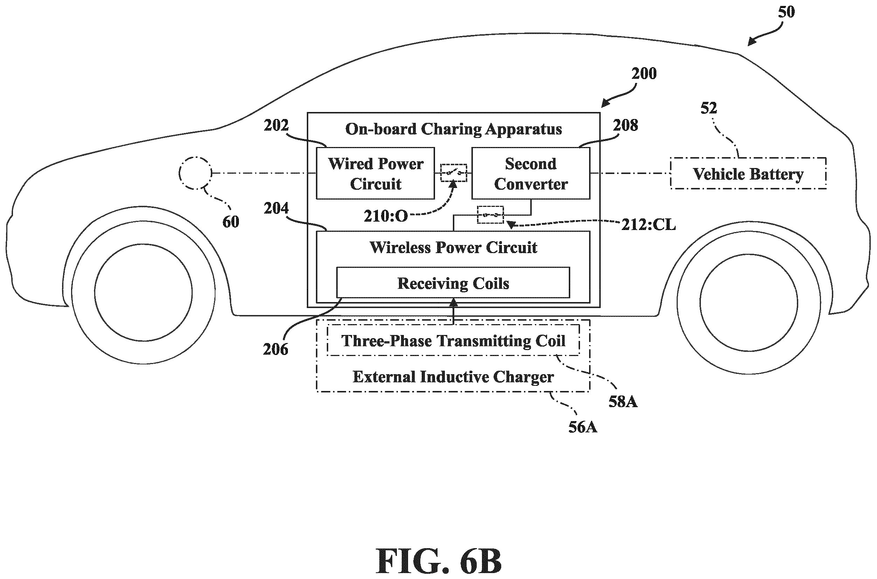

FIGS. 6A-6C schematically illustrate another example of an on-board charging apparatus 200 according to the present disclosure. The on-board charging apparatus 200 includes a wired power circuit 202 configured to be conductively coupled to an external power source 54 and receive AC power from the external power source 54 (e.g. from a power grid). The on-board charging apparatus 200 also includes a wireless power circuit 204 including a plurality of receiving coils 206 configured to be electromagnetically coupled to a three-phase transmitting coil 58A of a three-phase external inductive charger 56A and receive three-phase AC power therefrom. At least one of the plurality of receiving coils 206 is further configured to be electromagnetically coupled to a single-phase transmitting coil 58B of a single-phase external inductive charger 56B and receive single-phase AC power therefrom. The on-board charging apparatus 200 further includes a converter 208 coupled to the wired power circuit 202 and the plurality of receiving coils 206 of the wireless power circuit 204. The converter 208 converts the AC power from the wired power circuit 202 and the plurality of receiving coils 206 into DC power to supply the DC power to the battery 52 of the electrified vehicle 50. It should be appreciated that the converter 208 may operate in one of a three-phase mode or a single-phase mode based on which of the three-phase external inductive charger 56A (FIG. 6B) and the single-phase external inductive charger 56B are electromagnetically coupled to the plurality of receiving coils 206. It should also be appreciated that the on-board charging apparatus 200 may include a bypass circuit for directly connecting a charging port 60 of the electrified vehicle 50 to the battery 52 such that the battery 52 may accept a DC fast charge.

The configurations of the wired power circuit 202, the wireless power circuit 204, the plurality of receiving coils 206, and the converter 208 may be similar to those described above in the context of the wired power circuit 102, the wireless power circuit 104, the plurality of receiving coils 106, and the converter 108, and, thus, duplicative description of these components has been omitted for brevity. Also, similar to as described above in the context of the on-board charging apparatus 100, the on-board charging apparatus 200 may be further defined as a bidirectional on-board charging apparatus 200. In these examples, the converter 208 may be further defined as a bidirectional converter 208 (similar to bidirectional converter 108, described above).

With continued reference to FIGS. 6A-6C, the on-board charging apparatus 200 may further include one or more coil switches 210 (illustrated in phantom) interposed between the plurality of receiving coils 206 and the converter 208. The coil switch(es) 210 may be operable between a coil switch closed state 210CL and a coil switch open state 2100 for selectively interrupting electrical communication between the plurality of receiving coils 206 and the converter 208. The on-board charging apparatus 200 may further include one or more winding switches 212 (illustrated in phantom) interposed between the wired power circuit 202 and the converter 208. The winding switch(es) 212 may be operable between a winding switch closed state 212CL and a winding switch open state 2120 for selectively interrupting electrical communication between the wired power circuit 202 and the converter 208. The coil switch(es) 210 and the winding switch(es) 212 may be in communication with the controller 113 such that the controller 113 is configured to operate the coil switch 210 and/or the winding switch 212 based on the operating mode of the on-board charging apparatus 200. The coil switch(es) 210 and the winding switch(es) 212 may be realized as similar configurations to that described above. It should also be appreciated that in some configurations, the on-board charging apparatus 200 may not include the coil switch(es) 210 and/or the winding switch(es) 212.

Referring to FIG. 6A, the on-board charging apparatus 200 is configured to operate in a plurality of modes including a wired charging mode. In the wired charging mode, the winding switch(es) 212 is/are operated in the winding switch closed state 212CL in response to the wired power circuit 202 being conductively coupled to the external power source 54 such that the wired power circuit 202 energizes the converter 208 to provide power to the battery 52 of the electrified vehicle 50. Additionally, in the wired charging mode, the coil switch(es) 210 is/are operated in the coil switch open state 2100 in response to the wired power circuit 202 being conductively coupled to the external power source 54 to interrupt electrical communication between the plurality of receiving coils 206 and the converter 208 to prevent the wireless power circuit 204 from being energized.

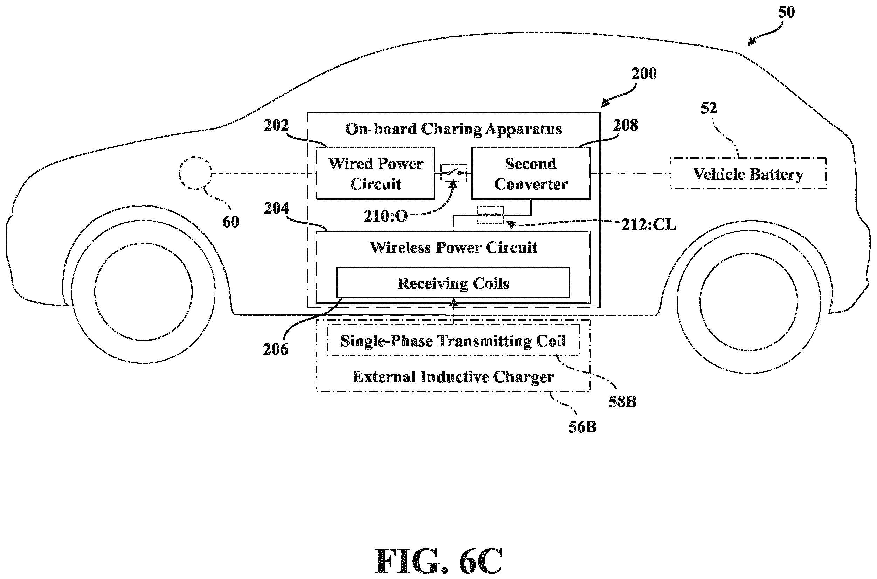

Referring to FIG. 6B and 6C, the plurality of modes of the on-board charging apparatus 200 also includes a wireless charging mode. In the wireless charging mode, the coil switch(es) 210 is/are operated in the coil switch closed state 210CL in response to the wireless power circuit 204 being electromagnetically coupled to one of the three-phase external inductive charger 56A (FIG. 6B) and the single-phase external inductive charger 56B (FIG. 6C) such that the wireless power circuit 204 energizes the converter 208 to provide power to the battery 52 of the electrified vehicle 50. Additionally, in the wireless charging mode, the winding switch(es) 212 is/are operated in the winding switch open state 2120 in response to the wireless power circuit 204 being electromagnetically coupled to the external inductive charger 56 to interrupt electrical communication between wired power circuit 202 and the converter 208 to prevent the wired power circuit 202 from being energized.

Several embodiments have been described in the foregoing description. However, the embodiments described herein are not intended to be exhaustive or limit the invention to any particular form. The terminology which has been used is intended to be in the nature of words of description rather than of limitation. Many modifications and variations are possible in light of the above teachings and the invention may be practiced otherwise than as specifically described.

Various additional alterations and changes beyond those already mentioned herein can be made to the above-described embodiments. This disclosure is presented for illustrative purposes and should not be interpreted as an exhaustive description of all embodiments or to limit the scope of the claims to the specific elements illustrated or described in connection with these embodiments. For example, and without limitation, any individual element(s) of the described embodiments may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Any reference to claim elements in the singular, for example, using the articles "a," "an," "the" or "said," is not to be construed as limiting the element to the singular. It will be further appreciated that the terms "include," "includes," and "including" have the same meaning as the terms "comprise," "comprises," and "comprising."

Although the present invention has been described above and is defined in the attached claims, it should be understood that the invention may alternatively be defined in accordance with the following embodiments:
1. An on-board charging apparatus for charging a battery of an electrified vehicle, said on-board charging apparatus comprising:
   a wired power circuit configured to be conductively coupled to an external power source and receive AC power therefrom;
   a wireless power circuit comprising a plurality of receiving coils configured to be electromagnetically coupled to a transmitting coil of an external inductive charger and receive three-phase AC power therefrom;
   a converter coupled to said wired power circuit and said plurality of receiving coils of said wireless power circuit, wherein said converter converts the AC power from said wired power circuit and said plurality of receiving coils into DC power to supply the DC power to the battery of the electrified vehicle;
   a coil switch interposed between said plurality of receiving coils and said converter, said coil switch operable between a coil switch closed state and a coil switch open state for selectively interrupting electrical communication between said plurality of receiving coils and said converter; and
   a winding switch interposed between said wired power circuit and said converter, said winding switch operable between a winding switch closed state and a winding switch open state for selectively interrupting electrical communication between said wired power circuit and said converter.
2. The on-board charging apparatus of embodiment 1, wherein said plurality of receiving coils comprises a first receiving coil for receiving a first phase of AC power from the transmitting coil, a second receiving coil for receiving a second phase of AC power from the transmitting coil, and a third receiving coil for receiving a third phase of AC power from the transmitting coil.
3. The on-board charging apparatus of embodiment 2, wherein a first terminal of said first receiving coil, a first terminal of said second receiving coil, and a first terminal of said third receiving coil are coupled such that said first receiving coil, said second receiving coil, and said third receiving coil are arranged in a Y-configuration.
4. The on-board charging apparatus of embodiment 3, wherein said converter comprises:
   a first leg coupled to a second terminal of said first receiving coil,
   a second leg coupled to a second terminal of said second receiving coil, and
   a third leg coupled to a second terminal of said third receiving coil.
5. The on-board charging apparatus of embodiment 4, wherein said coil switch comprises as a plurality of coil switches comprising:
   a first coil switch interposed between said first leg of said converter and said second terminal of said first receiving coil to selectively interrupt electrical communication therebetween,
   a second coil switch interposed between said second leg of said converter and said second terminal of said second receiving coil to selectively interrupt electrical communication therebetween, and
   a third coil switch interposed between said third leg of said converter and said second terminal of said third receiving coil to selectively interrupt electrical communication therebetween;
   wherein said plurality of coil switches are each operated in the coil switch open state in response to said wired power circuit being conductively coupled to the external power source to interrupt electrical communication between said plurality of receiving coils and said converter.
6. The on-board charging apparatus of embodiment 4, wherein said wired power circuit is coupled to two of said first leg, said second leg, and said third leg of said converter.
7. The on-board charging apparatus of embodiment 2, wherein said first receiving coil, said second receiving coil, and said third receiving coil are electrically isolated from each other.
8. The on-board charging apparatus of embodiment 7, wherein said converter comprises:
   a first pair of legs coupled to said first receiving coil,
   a second pair of legs coupled to said second receiving coil, and
   a third pair of legs coupled to said third receiving coil.
9. The on-board charging apparatus of embodiment 8, wherein said coil switch is further defined as a plurality of coil switches comprising:
   at least one first coil switch interposed between said first pair of legs and said first receiving coil to selectively interrupt electrical communication therebetween,
   at least one second coil switch interposed between said second pair of legs and said second receiving coil to selectively interrupt electrical communication therebetween, and
   wherein said plurality of coil switches are each operated in the coil switch open state in response to said wired power circuit being conductively coupled to the external power source to interrupt electrical communication between said plurality of receiving coils and said converter.
10. The on-board charging apparatus of embodiment 8, wherein said wired power circuit is coupled to at least one of said first pair of legs, said second pair of legs, and said third pair of legs of said converter.
11. The on-board charging apparatus of embodiment 1, wherein the external inductive charger is further defined as a three-phase external inductive charger including a three-phase transmitting coil, and wherein at least one of said plurality of receiving coils is further configured to be electromagnetically coupled to a single-phase transmitting coil of a single-phase external inductive charger and receive single-phase AC power therefrom.
12. The on-board charging apparatus of embodiment 11, wherein said winding switch is operated in said winding switch open state in response to said wireless power circuit being electromagnetically coupled to one of the three-phase external inductive charger and the single-phase external inductive charger to interrupt electrical communication between said wired power circuit and said converter.
13. The on-board charging apparatus of embodiment 1, wherein said coil switch is operated in said coil switch open state in response to said wired power circuit being conductively coupled to the external power source to interrupt electrical communication between said plurality of receiving coils and said converter; and/or
   wherein said winding switch is operated in said winding switch open state in response to said wireless power circuit being electromagnetically coupled to the external inductive charger to interrupt electrical communication between said wired power circuit and said converter.
14. The on-board charging apparatus of embodiment 1, wherein said on-board charging apparatus is further defined as a bidirectional on-board charging apparatus, and said converter is further defined as a bidirectional converter.
15. The on-board charging apparatus of embodiment 1, wherein said wired power circuit comprises:
   a wired power converter for converting low-frequency AC power received from the external power source into DC power;
   an inverter coupled to said wired power converter for converting the DC power from said wired power converter into high-frequency AC power at a first voltage; and
   an insulated transformer comprising:
      a primary winding coupled to said inverter, and
      a secondary winding electromagnetically coupled to said primary winding for transforming the high-frequency AC power from the first voltage to a second voltage which is different than the first voltage;
   wherein said secondary winding is coupled to said converter such that said converter converts the high-frequency AC power from said secondary winding into DC power to supply the DC power to the battery of the electrified vehicle.

## Claims

1. An on-board charging apparatus for charging a battery of an electrified vehicle, said on-board charging apparatus comprising:
a wired power circuit configured to be conductively coupled to an external power source and receive AC power therefrom;
a wireless power circuit comprising a plurality of receiving coils configured to be electromagnetically coupled to a transmitting coil of an external inductive charger and receive three-phase AC power therefrom;
a converter coupled to said wired power circuit and said plurality of receiving coils of said wireless power circuit, wherein said converter converts the AC power from said wired power circuit and said plurality of receiving coils into DC power to supply the DC power to the battery of the electrified vehicle;
a coil switch interposed between said plurality of receiving coils and said converter, said coil switch operable between a coil switch closed state and a coil switch open state for selectively interrupting electrical communication between said plurality of receiving coils and said converter; and
a winding switch interposed between said wired power circuit and said converter, said winding switch operable between a winding switch closed state and a winding switch open state for selectively interrupting electrical communication between said wired power circuit and said converter.

2. The on-board charging apparatus of claim 1, wherein said plurality of receiving coils comprises a first receiving coil for receiving a first phase of AC power from the transmitting coil, a second receiving coil for receiving a second phase of AC power from the transmitting coil, and a third receiving coil for receiving a third phase of AC power from the transmitting coil.

3. The on-board charging apparatus of claim 2, wherein a first terminal of said first receiving coil, a first terminal of said second receiving coil, and a first terminal of said third receiving coil are coupled such that said first receiving coil, said second receiving coil, and said third receiving coil are arranged in a Y-configuration.

4. The on-board charging apparatus of any one of claims 2 or 3, wherein said converter comprises:
a first leg coupled to a second terminal of said first receiving coil,
a second leg coupled to a second terminal of said second receiving coil, and
a third leg coupled to a second terminal of said third receiving coil.

5. The on-board charging apparatus of claim 4, wherein said coil switch comprises as a plurality of coil switches comprising:
a first coil switch interposed between said first leg of said converter and said second terminal of said first receiving coil to selectively interrupt electrical communication therebetween,
a second coil switch interposed between said second leg of said converter and said second terminal of said second receiving coil to selectively interrupt electrical communication therebetween, and
a third coil switch interposed between said third leg of said converter and said second terminal of said third receiving coil to selectively interrupt electrical communication therebetween;
wherein said plurality of coil switches are each operated in the coil switch open state in response to said wired power circuit being conductively coupled to the external power source to interrupt electrical communication between said plurality of receiving coils and said converter.

6. The on-board charging apparatus of any one of claims 4 or 5, wherein said wired power circuit is coupled to two of said first leg, said second leg, and said third leg of said converter.

7. The on-board charging apparatus of claim 2, wherein said first receiving coil, said second receiving coil, and said third receiving coil are electrically isolated from each other.

8. The on-board charging apparatus of claim 7, wherein said converter comprises:
a first pair of legs coupled to said first receiving coil,
a second pair of legs coupled to said second receiving coil, and
a third pair of legs coupled to said third receiving coil.

9. The on-board charging apparatus of claim 8, wherein said coil switch is further defined as a plurality of coil switches comprising:
at least one first coil switch interposed between said first pair of legs and said first receiving coil to selectively interrupt electrical communication therebetween,
at least one second coil switch interposed between said second pair of legs and said second receiving coil to selectively interrupt electrical communication therebetween, and
wherein said plurality of coil switches are each operated in the coil switch open state in response to said wired power circuit being conductively coupled to the external power source to interrupt electrical communication between said plurality of receiving coils and said converter.

10. The on-board charging apparatus of any one of claims 8 or 9, wherein said wired power circuit is coupled to at least one of said first pair of legs, said second pair of legs, and said third pair of legs of said converter.

11. The on-board charging apparatus of any one of the preceding claims, wherein the external inductive charger is further defined as a three-phase external inductive charger including a three-phase transmitting coil, and wherein at least one of said plurality of receiving coils is further configured to be electromagnetically coupled to a single-phase transmitting coil of a single-phase external inductive charger and receive single-phase AC power therefrom.

12. The on-board charging apparatus of claim 11, wherein said winding switch is operated in said winding switch open state in response to said wireless power circuit being electromagnetically coupled to one of the three-phase external inductive charger and the single-phase external inductive charger to interrupt electrical communication between said wired power circuit and said converter.

13. The on-board charging apparatus of any one of the preceding claims, wherein said coil switch is operated in said coil switch open state in response to said wired power circuit being conductively coupled to the external power source to interrupt electrical communication between said plurality of receiving coils and said converter; and/or
wherein said winding switch is operated in said winding switch open state in response to said wireless power circuit being electromagnetically coupled to the external inductive charger to interrupt electrical communication between said wired power circuit and said converter.

14. The on-board charging apparatus of any one of the preceding claims, wherein said on-board charging apparatus is further defined as a bidirectional on-board charging apparatus, and said converter is further defined as a bidirectional converter.

15. The on-board charging apparatus of any one of the preceding claims, wherein said wired power circuit comprises:
a wired power converter for converting low-frequency AC power received from the external power source into DC power;
an inverter coupled to said wired power converter for converting the DC power from said wired power converter into high-frequency AC power at a first voltage; and
an insulated transformer comprising:
a primary winding coupled to said inverter, and
a secondary winding electromagnetically coupled to said primary winding for transforming the high-frequency AC power from the first voltage to a second voltage which is different than the first voltage;
wherein said secondary winding is coupled to said converter such that said converter converts the high-frequency AC power from said secondary winding into DC power to supply the DC power to the battery of the electrified vehicle.
